# EUROPÄISCHE PATENTSCHRIFT

(11) **EP 3 017 681 B1**
(45) Veröffentlichungstag und Bekanntmachung des Hinweises auf die Patenterteilung: **13.06.2018**
(21) Anmeldenummer: 15401113.4
(22) Anmeldetag: 30.10.2015
(51) Int. Cl.: A01C 21/00, A01C 17/00

(54) **VERTEILMASCHINE**
CENTRIFUGAL SPREADER
ÉPANDEUR CENTRIFUGUE

(30) Priorität: 04.11.2014 DE 102014116026
(43) Veröffentlichungstag der Anmeldung: 11.05.2016
(73) Patentinhaber: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Ströbel-Fröschle, Markus, 49124 Georgsmarienhütte (DE); Ruschmeier, Kai, 32547 Bad Oeynhausen (DE)

(56) Entgegenhaltungen:
- EP-A1- 2 756 745
- EP-A2- 2 777 376
- DE-A1- 19 723 359

## Beschreibung

Die Erfindung betrifft ein Verfahren zur Bestimmung der Verteilcharakteristik von Streugut gemäß dem Oberbegriff des Patentanspruches 1 sowie einer Verteilmaschine zur Durchführung eines solchen Verfahrens gemäß des unabhängigen Patentanspruchs 7.

Verteilmaschinen, ausgebildet als Zentrifugalstreuer, welche typischerweise landwirtschaftliches Gut von zumindest einer, vorzugsweise zwei, Schleuderscheiben mittels auf den Schleuderscheiben angeordneten, typischerweise jeweils zwei, Wurfschaufeln verteilen sind seit geraumer Zeit Stand der Technik. Das Streugut wird mittels der auf der rotierenden Schleuderscheibe angeordneten Wurfschaufeln durch die auftretenden Zentrifugalkräfte in radialer Richtung beschleunigt und auf diese Weise verteilt. Die Wurfweite und Geometrie des Streufächers, also des Bereichs in dem das Streugut verteilt wird, hängt hierbei von verschiedensten Faktoren ab:
- Die Geometrie der Schleuderscheibe beeinflusst unter anderem den vertikalen Abwurfwinkel.
- Die Anordnung der Wurfschaufel auf der Schleuderscheibe sowie Länge und Geometrie der Wurfschaufel beeinflusst die Abwurfgeschwindigkeit und Flugrichtung des Streugutes.
- Die Beschaffenheit des Streugutes (Korngröße, Korngeometrie und Dichte) beeinflusst die Abwurfgeschwindigkeit und damit die Wurfweite.
- Der Auftreffpunkt des Streugutes auf der Schleuderscheibe beeinflusst die Abwurfgeschwindigkeit sowie den horizontalen Abwurfwinkel
- Die Schleuderscheibendrehzahl hat ebenso Auswirkungen auf die Abwurfgeschwindigkeit

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass 7 nicht nur die Menge des aufgebrachten Streugutes, sowie die Schleuderscheibendrehzahl einstellbar ist. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.

Das Einstellen der verschiedenen Parameter erfolgt mit Hilfe von Tabellen, Formeln und/oder Graphen in denen in Abhängigkeit des Streuparameters, beispielsweise der Schleuderscheibendrehzahl für eine bestimmte Schleuderscheibe, Wurfschaufel und Aufgabepunkt, der mittlere horizontale Abwurfwinkel, also der Abwurfwinkel relativ zu einer Linie, welche vom Zentrum der Schleuderscheibe aus entgegen der Fahrtrichtung in radialer Richtung gezogen wird, und die mittlere Wurfweite angegeben ist. Genauso können Tabellen, Formeln und/oder Graphen vorliegen, für deren Erstellung andere Größen variiert, konstant gehalten und gemessen wurden (DE 36 17 377 C2, DE 33 10 424 C2).

Ebenso ist es Stand der Technik den Abwurfwinkel mittels Sensoren zu bestimmen und entsprechend obiger Tabellen, Formeln und/oder Graphen bei Abweichung zu einem vorgegebenen Sollwert Anpassungen an den genannten Parametern vorzunehmen (DE 38 87 218T2, DE 197 23 359 A1). In der EP 2 756 745 A1 werden zu diesem Zweck Radarsensoren unter Ausnutzung des Dopplereffektes verwendet.

Unbeachtet geblieben in diesem Zusammenhang ist bisher die Entmischung von aus mehreren Komponenten bestehenden Streugütern während des Verteilprozesses. Das gleichzeitige Ausbringen von verschiedenen Streugütern, vorzugsweise Düngemitteln oder Saatgut, während eines einzigen Verteilprozesses trägt den bereits erwähnten gestiegenen Anforderungen in der Landwirtschaft Rechnung, indem es die Effizienz erhöht und somit Kosten, Ressourcen und auch Zeit gespart werden. Nachteil dieser Vorgehensweise ist, dass eine während des Ausbringes von gemischten körnigen Streugütern auftretende Entmischung zu einer teilweisen Über- oder Unterversorgung der bearbeitenden Flächen mit den verschiedenen Komponenten führt (siehe hierzu bspw. Heege, H.J. "Hofnahes Mischen von Düngemitteln und der teilflächenspezifische Landbau. "BERICHTE ÜBER LANDWIRTSCHAFT-HAMBURG- 79.1 (2001): 94-106".).

Das gleichzeitige Ausbringen von verschiedenen Streugutkomponenten wurde bereits vor Jahrzehnten vorgeschlagen und es wurden entsprechend Verteilmaschinen entwickelt, welche das gleichzeitige Ausbringen verschiedener Streugutsorten in einem Arbeitsgang ermöglichen (DE 26 22 782 A1, DE 41 02 783 A1). Die technische Ausgestaltung dieser Lösungen ist jedoch entweder nicht praktikabel oder vergleichsweise kompliziert. So wird in der DE 26 22 782 A1 vorgeschlagen mittels eines Schiebers das Mischungsverhältnis des ausgebrachten Streugutes zu regulieren. Die verschiedenen Streugutsorten werden in dieser Ausgestaltung in getrennten Segmenten des Vorratsbehälters der Verteilmaschine vorgehalten. Nachteil dieser Lösung ist, dass die Verteilung des Streugutes nicht in Abhängigkeit der bei der Verteilung selbst auftretenden Entmischung reguliert werden kann, um die Entmischung zu minimieren, da beispielsweise der Aufgabepunkt für die Streugutsorten sich unmittelbar nebeneinander befindet und nicht unabhängig regulierbar ist. Das Mischungsverhältnis des Streugutes einzustellen ist demgegenüber nach heutigem Stand der Technik kein sich darstellendes Problem, da normalerweise vor dem Verteilprozess das für die zu bearbeitende Fläche optimale Mischungsverhältnis bestimmt und dann während des Verteilprozesses nicht mehr geändert wird. Daher wird die Verteilmaschine typischerweise mit bereits vorgemischtem Streugut mit dem optimalen Streugutverhältnis beladen.

Durch Nutzung der anderen vorgeschlagenen Lösung gemäß der DE 41 02 783 A1 könnte zwar die Verteilcharakteristik für verschiedene Streugutsorten individuell eingestellt werden, jedoch ist eine Überprüfung dieser während des Verteilprozesses nicht vorgesehen. Zudem ist der konstruktive Aufwand dieser Lösung immens, da für die vorzugsweise zwei verschiedenen Streugutsorten jeweils zwei Schleuderscheiben vorgesehen sind. Die Kosten dieser Lösung im Vergleich zu einem üblichen Schleuderstreuer wären dementsprechend sehr hoch. Da der Anteil der gemischten Streugüter, welche mit einer entsprechenden Verteilmaschine ausgebracht werden und die eine signifikante Entmischung während des Verteilprozesses zeigen jedoch vergleichsweise gering ist, erweist sich eine solche Ausgestaltung als zu kompliziert und damit zu kostenintensiv.

Aufgabe der vorliegenden Erfindung ist es daher auf möglichst einfache und kostengünstige Weise die während des Verteilprozesses auftretende Entmischung von aus mehreren Komponenten bestehendem Streugut zu bestimmen, so dass vorzugsweise der Verteilprozess entsprechend der gemessenen Entmischung überwacht und angepasst werden kann.

Dies wird durch ein Verfahren zur Bestimmung der Verteilcharakteristik von Streugut, welches aus zumindest zwei Komponenten gemischt wurde, gemäß des Oberbegriffes des Patentanspruches 1 erreicht, wobei aus den Messdaten des zumindest einen berührungslos arbeitenden Sensors, vorzugsweise Radarsensors, in ausreichender Entfernung der Verteilmaschine von vorzugsweise zumindest 1 m eine Entmischung der Streugutkomponenten detektiert und je ein mittlerer Abwurfwinkel für jede Komponente mittels des auf dem Jobrechner oder Terminal installierten Programms berechnet wird. Auf diese Weise kann während des Verteilprozesses permanent die Entmischung der ausgebrachten Streugutkomponenten beobachtet und überwacht werden, indem das ausgebrachte Streugut mittels zumindest eines bewegbaren Sensors oder zumindest dreier ortsfester Sensoren an unterschiedlichen Position überwacht wird. Bei einer zu großer Entmischung kann so beispielsweise der Verteilvorgang entsprechend angepasst werden, indem die Arbeitsbreite der Verteilmaschine reduziert und der Überlappungsbereich benachbarter Fahrspuren und/oder die Anordnung der Fahrspuren geändert wird.

In einer vorteilhaften Weiterbildung der Erfindung wird neben dem mittleren Abwurfwinkel zusätzlich die mittlere Wurfweite aus zwei Werten der Fluggeschwindigkeit für jede Komponente mittels zumindest zweier Sensoren, vorzugsweise Radarsensoren, bestimmt, welche die Geschwindigkeit des Streugutes in unterschiedlichen Flugphasen, also unterschiedlichen Abständen von der Verteilmaschine, messen. Somit kann, um ein vollständigeres Bild von der Entmischung und der Verteilcharakteristik der Verteilmaschine der betreffenden Streugutkomponenten zu bekommen, die Wurfweite und zusätzlich der Auftreffpunkt der verschiedenen Streugutkomponenten in einer alternativen, weitergehenden Ausgestaltung einzeln für jede Streugutkomponente noch genauer bestimmt werden.

In einer vorteilhaften Ausgestaltung der Erfindung wird die verteilte Streugutmenge für jede Streugutkomponente individuell und/oder das Mengenverhältnis und/oder Volumen und/oder Massenverhältnis der verteilten Streugutkomponenten aus den Messsignalen des zumindest einen Sensors bestimmt. Somit kann beispielsweise auch eine Entmischung der Streugutkomponenten im Streugutbehälter selbst überwacht und detektiert werden. Es ist beispielsweise denkbar, dass durch eine während einer Transportfahrt auftretende Entmischung der Streugutkomponenten im Streugutbehälter der Verteilmaschine zu Beginn des Streuvorganges ein erheblich größerer Anteil einer ersten Streugutkomponente mit größeren Streugutpartikeln im Verhältnis zu einer zweiten Streugutkomponente mit kleineren Streugutpartikeln ausgebracht wird und sich dieses Verhältnis während des Verteilprozesses mit abnehmender Füllhöhe im Streugutbehälter umkehrt. Ein solcher Prozess würde ohne das erfindungsgemäße Verfahren normalerweise unbemerkt bleiben. Auf dieser Basis kann beispielsweise eine Einschätzung getroffen werden, ob das betreffende gemischte Streugut für zukünftige Anwendungen geeignet ist oder nicht.

In einer vorteilhaften Weiterbildung der Erfindung werden die Einstellparameter der Verteilmaschine derart eingestellt, dass mittels eines auf dem Jobrechner und/oder Terminal gespeicherten Programms entsprechend im Jobrechner und/oder Terminal gespeicherter und/oder durch das Bedienpersonal vorgegebener Werte die Entmischung der zumindest zwei Streugutkomponenten justiert wird, vorzugsweise wird ein maximaler Grad der Entmischung angegeben und bei Überschreitung eine Anpassung der Einstellparameter, vorzugsweise Schleuderscheibendrehzahl und/oder Aufgabepunkt des Streugutes auf die Schleuderscheibe vorgenommen. Auf diese Weise kann während des Verteilprozesses auf die Einstellparameter derart eingewirkt werden, dass die Entmischung reduziert wird. Vorzugsweise kann die Arbeitsbreite reduziert und die Anordnung der Fahrspuren auf der bearbeiteten Fläche entsprechend angepasst werden.

In einer vorteilhaften Weiterbildung der Erfindung wird der mittlere Abwurfwinkel der Streugutkomponenten an Hand vorgegebener in dem Jobrechner und/oder dem Terminal hinterlegter Parameter, insbesondere des Mischungsverhältnisses der Streugutkomponenten oder anderer Gewichtungsfaktoren, mittels Einstellung von Einstellparametern der Verteilmaschine, wie vorzugsweise Aufgabepunkt des Streugutes auf die Schleuderscheibe und/oder Schleuderscheibendrehzahl durch den Jobrechner und/oder das Terminal automatisch eingestellt. Auf diese Weise können vorteilhaft das Mischungsverhältnis der Streugutkomponenten und/oder andere Faktoren für die automatische Einstellung der Einstellparameter der Verteilmaschine herangezogen werden. Beispielsweise kann es bei der Verteilung wichtig sein, dass eine Komponente in der Gesamtschau der verschiedenen befahrenen Fahrgassen besonders gleichmäßig verteilt wird, während dies bei einer zweiten Komponente eine untergeordnete Rolle spielt.

Die Erfindung beinhaltet darüber hinaus einen unabhängigen Anspruch betreffend eine Verteilmaschine zur Durchführung des erfindungsgemäßen Verfahrens gemäß dem Oberbegriff von Patentanspruch 7, wobei aus den Messdaten des zumindest einen Sensors, vorzugsweise Radarsensors, in ausreichender Entfernung der Verteilmaschine von vorzugsweise zumindest 1 m eine Entmischung der Streugutkomponenten detektiert wird und ein Programm auf dem Jobrechner oder Terminal installiert ist, mittels welchem je ein mittlerer Abwurfwinkel für jede Komponente berechnet wird.

Weitere Einzelheiten der Erfindung sind der Beispielsbeschreibung und den Zeichnungen zu entnehmen. Hierbei zeigen
- Fig. 1: schematisch die Anordnung der Schleuderscheibe und den ihr zugeordneten Sensoren zur Detektion des verteilten Streugutes,
- Fig. 2: ein Diagramm zur Bestimmung des horizontalen Abwurfwinkels der verschiedenen Streugutkomponenten und
- Fig. 3: ein Diagramm zur Bestimmung der Wurfweite der verschiedenen Streugutkomponenten.

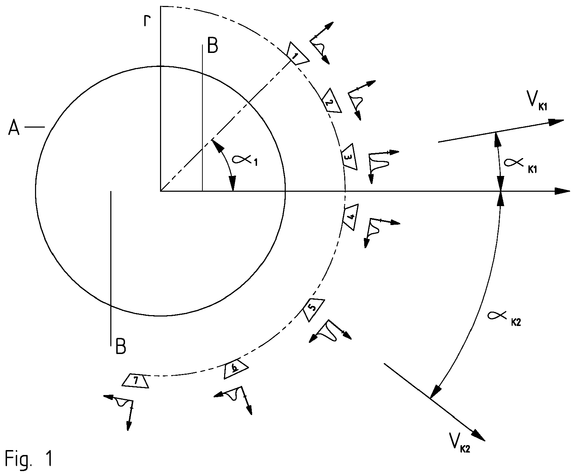

Das erfindungsgemäße Verfahren sowie mögliche bevorzugte Ausgestaltungen einer erfindungsgemäßen Verteilmaschine werden in schematischer Darstellung in Fig. 1 dargestellt. Der Klarheit wegen wurden konstruktive Details, welche für die Darstellung der Erfindung unerheblich, für das Funktionieren der Verteilmaschine aber unerlässlich sind, weggelassen. Um die Klarheit der Darstellung zu wahren ist insbesondere das abgeworfene Streugut in Figuren 1 nicht dargestellt.

Fig. 1 zeigt schematisch eine Schleuderscheibe A und zwei auf ihr angeordnete Wurfschaufeln B. Außerdem ist die bevorzugte Rotationsrichtung der Scheibe angedeutet. Im Abstand r von der Schleuderscheibe ist mindestens ein beweglicher Sensor zur Messung an unterschiedlichen Positionen im gleichen Abstand zum Zentrum der Schleuderscheibe oder drei ortsfeste Sensoren, vorzugsweise berührungslos arbeitende Sensoren, angeordnet. Im vorliegenden Ausführungsbeispiel handelt es sich um sieben Radarsensoren, welche jeweils im Abstand r zum Zentrum der Schleuderscheibe auf einer Verbindungslinie zum Zentrum der Schleuderscheibe angeordnet sind, welche jeweils unterschiedliche Winkel α₁ - α₇ mit einer entgegen der Fahrtrichtung durch den Mittelpunkt der Schleuderscheibe verlaufenden Achse R einschließen. Die Sensoren sind vorzugsweise derart angeordnet, dass sie die Bewegung des abgeworfenen Streugutes nicht behindern, also vorzugsweise oberhalb oder unterhalb des vorbeifliegenden Streugutes und sind in einem Abstand r von vorzugsweise ungefähr 0,5 m vom Zentrum der Schleuderscheibe entfernt angebracht. Der Messpunkt und damit der Abstand der Sensoren von der Schleuderscheibe wird vorteilhaft derart gewählt, dass die Bewegung der Streugutpartikel nach dem Verlassen der Streuscheibe sich stabilisiert hat, die Entfernung und damit die Aufspaltung des abgeworfenen Streugutes jedoch andererseits noch nicht zu groß ist. Zudem sind die Sensoren derart angeordnet, dass der Bereich des Kreisumfangssegmentes ungefähr im Abstand r zu der Schleuderscheibe bevorzugt erfasst wird, der von dem abgeworfenen Streugut bevorzugt passiert wird.

Den dargestellten Sensoren ist jeweils in der Fig. 1 ein schematisches Diagramm mit einer Kurve einer entsprechenden Dopplermessung zugeordnet. Wie bereits aus den Diagrammen ersehen werden kann, hat eine Komponente des abgeworfenen Streuguts, welches in diesem Beispiel aus zumindest zwei Streugutkomponenten bestehen soll, bevorzugt den Messbereich des Sensors 3 in Richtung v_{K1} unter dem Winkel α_{K1} zur Achse R passiert, da dort die größte Signalamplitude A₃ gemessen wurde. Zusätzlich wurde eine ähnlich große Signalamplitude am Sensor 5 gemessen, so dass angenommen werden kann, dass die zweite Streugutkomponente bevorzugt unter diesem Winkel abgeworfen wurde und den Sensor 5 in Richtung v_{K2} unter dem Winkel α_{K2} passiert hat. Insbesondere zeigt das mittels des 1 gemessene Signal eine niedrigere Amplitude als die Sensoren 3 und 5. Zu den am Rand der Sensoranordnung sich befindlichen Sensoren 1 und 7 hin reduziert sich die Signalamplitude entsprechend weiter.

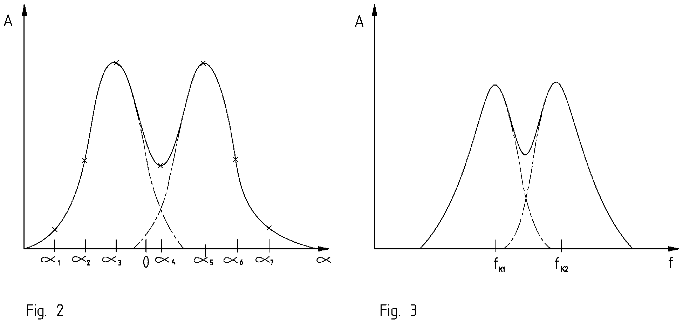

In Fig. 2 dargestellt ist ein Diagramm welches die Bestimmung des Abwurfwinkels der beiden Streugutkomponenten erlaubt. Hierbei wurden die Amplituden einer zumindest annähernd zeitgleich mit allen sieben Sensoren durchgeführten Messung gegen den jeweiligen Winkel α aufgetragen und eine entsprechende Verteilungskurve mit bekannten mathematischen Methoden unter der Annahme interpoliert, dass die Kurve aus einer Überlagerung zweier Verteilfunktionen besteht. An den Maxima dieser Kurve können nun die mittleren Abwurfwinkel für die beiden Streugutkomponenten α_{K1} und α_{K2} bestimmt werden, welche in diesem Beispiel den Winkeln α₃ und α₅ entsprechen. Alternativ könnte in dem vorliegenden Diagramm statt der Amplitude der einzelnen Messkurven deren Integral, also die Fläche unter der Kurve, aufgetragen werden. Dies wäre ein präziseres Maß für die Anzahl der Streugutpartikel, die sich an dem Sensor vorbeibewegt haben, jedoch ist eine derartige Integralbildung erheblich aufwendiger, führt jedoch nicht zu wesentlich präziseren Ergebnissen. Neben dem mittleren Abwurfwinkel kann aus dem Diagramm zudem die Varianz des mittleren Abwurfwinkels nach der Berechnung der beiden gestrichelten Verteilkurven bestimmt werden. Auch kann abweichend von der gezeigten Darstellung und je nach Mischungsverhältnis der Streugutkomponenten und deren physikalischen Eigenschaften das Maximum, welches den mittleren Abwurfwinkel einer ersten Streugutkomponente anzeigt sehr viel größer sein, als das Maximum, welches den mittleren Abwurfwinkel einer zweiten Komponente angibt. Insbesondere kann der Unterschied der Abwurfwinkel so gering und/oder das Mischungsverhältnis so groß sein, dass nur ein Maximum beobachtet werden kann. Beispielsweise kann sich die zweite Streugutkomponente als Schulter in der Messkurve zeigen. In diesem Fall ist eine Bestimmung der Abwurfwinkel mittels mathematischer Fit-Funktionen zur Bestimmung der individuellen Verteilfunktionen erforderlich.

In einem weiteren Schritt ist es nun möglich mittels Dopplermessung aus den Sensorsignalen die Fluggeschwindigkeit der Streugutpartikel zu bestimmen. Analog ist auch hier eine Betrachtung der Varianz möglich, falls detaillierte Aussagen über die Verteilcharakteristik getroffen werden sollen. Bei der Dopplermessung werden die von dem Sensor ausgesendeten elektromagnetischen Wellen oder Schallwellen an den zu detektierenden Streugutpartikeln gestreut und/oder reflektiert. Die Wellenlänge der gemessenen Signale hängt von der Geschwindigkeit der Streugutpartikel, deren Position und Flugrichtung ab, wobei die letzten beiden Größen zumindest annähernd bekannt sind. Hier kann, sofern es bei der Verteilung des Streugutes zu einer Entmischung hinsichtlich der Fluggeschwindigkeit und Wurfweite kommt, eine Auswertung analog zu der Vorgehensweise von Fig. 2 vorgenommen werden. Wenn zwei sich in den Flugeigenschaften unterscheidende Streugutsorten einer Dopplermessung unterzogen werden und es zum Zeitpunkt der Messung zu einer signifikanten Entmischung der Geschwindigkeit gekommen ist, so ist ein Messergebnis wie beispielhaft in Fig. 3 gezeigt zu erwarten. Die Wendung Entmischung der Geschwindigkeit bezieht sich hierbei auf die Tatsache, dass auch verschiedene Streugutsorten typischerweise beim Abwurf von der Schleuderscheibe zumindest annähernd die gleiche Geschwindigkeit aufweisen. Eine Detektion von unterschiedlichen Geschwindigkeiten ist also erst nach einer kurzen Flugdauer, beispielsweise in 1 m Entfernung oder mehr von der Schleuderscheibe, möglich, da sich dann die unterschiedlichen Flugeigenschaften der Partikel bereits ausgewirkt haben.

Fig. 3 zeigt die beispielhafte Darstellung eine Dopplermessung eines aus zwei Komponenten bestehenden Streugutes. Die beiden Maxima der Kurve sind in etwa gleich groß, so dass gefolgert werden kann, dass das Streugut unter dem betreffenden Winkel zu gleichen Teilen ausgebracht wird. Es können jedoch, beispielsweise je nach Winkel unter dem der Sensor relativ zur Achse R angeordnet ist und je nach Entmischungsverhalten und Mischungsverhältnis der Streugutkomponenten, auch stark unterschiedliche Amplitude auftreten. Für stark unterschiedliche Höhen der Maxima der beiden zu bestimmenden Funktionen, deren Überlagerung als Messfunktion in Fig. 3 dargestellt ist, oder falls der Unterschied der gemessenen Frequenzen der Maxima sehr klein ist, kann es vorkommen, dass analog zu der Bestimmung des Abwurfwinkels, keine wohlunterscheidbaren Maxima in der Messkurve identifiziert werden können. In diesem Fall ist eine Berechnung der Wurfweite mittels einer mathematischen Fit-Funktion zur Bestimmung der individuellen Dopplersignale der beiden Streugutkomponenten aus dem überlagerten Messsignal geboten.

Da sich die Geschwindigkeit des Streugutes nach dem Abwurf von der Schleuderscheibe jedoch unterschiedlich entwickelt hat, ist davon auszugehen, dass die Wurfweite der beiden Streugutkomponenten unterschiedlich ist. Die verschiedenen Geschwindigkeiten lassen sich aus den unterschiedlichen Frequenzen f_{K1} und f_{K2} der Maxima der Kurven bestimmen, welche den beiden Streugutkomponenten zugeordnet werden. Zusätzlich kann mit bekannten mathematischen Fit-Funktionen eine Berechnung der beiden Einzelkurven aus der überlagerten Messkurve berechnet werden, in Fig. 3 dargestellt als gestrichelte Kurven. Dies ist insbesondere vorteilhaft, wenn die Amplitude einer der Einzelkurven sehr viel größer ist, als die der anderen.

Eine Berechnung der Wurfweite ist nun möglich, wenn entweder die Flugeigenschaften der Streugutkomponenten bekannt sind oder eine weitere Geschwindigkeitsmessung in einem anderen Abstand durchgeführt wird und so die Flugbahn der Streugutpartikel berechnet werden kann. Zudem sind weitere Verteilparameter für die Berechnung notwendig, wie beispielsweise die Lage der Verteilmaschine. Auch können zur Verbesserung der Berechnung zusätzliche Parameter, wie beispielsweise die Schleuderscheibendrehzahl, Schleuderscheibengeometrie und Wurfschaufelgeometrie, berücksichtigt werden. Zudem können bei mehreren Dopplermessungen im gleichen Abstand, aber unterschiedlichen Abwurfwinkeln, wie beispielsweise in Fig.1, die Daten der verschiedenen Sensoren vorteilhaft kombiniert werden, um die Berechnung der Wurfweite für die verschiedenen Komponenten zu verbessern.

Die berechneten Werte können nun vorteilhaft verwendet werden, um die Einstellparameter der Verteilmaschine so zu wählen, dass die Verteilung auf der bearbeiteten Fläche möglichst gleichmäßig ist. Hierfür ist eine laufende/ wiederholte Überwachung der mittleren Wurfweite und/oder des mittleren Abwurfwinkels der verteilten Streugutkomponenten notwendig. So kann vorzugsweise bei einer sehr starken Entmischung der Komponenten die Schleuderscheibendrehzahl reduziert werden und evtl. das Fahrgassensystem des Verteilprozesses angepasst werden. Diese Vorgänge können auch durch ein entsprechendes Programm auf einem Jobrechner und/oder Terminal der Verteilmaschine und/oder einer landwirtschaftlichen Zugmaschine durchgeführt werden. Zusätzlich oder alternativ können dem Bedienpersonal der Verteilmaschine Informationen über die Entmischung und/oder die Verteilcharakteristik des ausgebrachten Streugutes angezeigt werden. Beispielsweise können die berechneten mittleren Abwurfwinkel und/oder deren Variationskoeffizient und/oder die mittleren Wurfweiten und/oder deren Variationskoeffizient angezeigt werden. Dies kann vorteilhaft kombiniert werden mit einer Berechnung und Anzeige der Verteilcharakteristik der einzelnen Streugutkomponenten. Auch kann zusätzlich das Mischungsverhältnis der Streugutkomponenten aus den Messdaten berechnet und mit einem Sollwert verglichen werden oder die Entwicklung des Mischungsverhältnisses während des Ausbringprozesses überwacht werden.

Auch kann vorgesehen sein, das Mischungsverhältnis dem Terminal und/oder Jobrechner mitzuteilen und so in die Berechnung einzubeziehen. Auch können Gewichtungsfaktoren hinterlegt werden, welche die Tatsache berücksichtigen, dass eine gleichmäßige Verteilung beispielsweise bei einem ersten Streugut wichtiger ist, als bei einem zweiten, so dass die Verteilmaschine insbesondere so eingestellt werden kann, dass die Verteilung des ersten Streugutes möglichst gleichmäßig ist.

Die Zuordnung der gemessenen und/oder berechneten Wurfweiten und/oder Abwurfwinkel zu den verschiedenen Streugutkomponenten erfolgt entweder anhand des bekannten Mischungsverhältnisses, welches mit den Messdaten der Sensoren verglichen wird. Alternativ kann das Bedienpersonal anhand bekannter Unterschiede in der Verteilcharakteristik verschiedener Streugutkomponenten eine Auswahl treffen oder im Terminal und/oder Jobrechner speichern. Beispielsweise kann bekannt sein und/oder in dem Jobrechner und/oder Terminal hinterlegt werden, dass eine erste Streugutkomponente bei gleichen Verteilparametern eine größere mittlere Flugweite hat, weil die Partikel dieser Komponente größer und schwerer sind, als eine zweite Streugutkomponente. Zudem kann diese Auswahl oft schon durch eine kurze Inaugenscheinnahme des Streugutes auf Anhieb getroffen werden.

## Patentansprüche

1. Verfahren zur Bestimmung der Verteilcharakteristik von Streugut, welches aus zumindest zwei Komponenten in beliebigem Verhältnis, vorzugsweise kleiner als 9:1, gemischt wurde und mittels einer landwirtschaftlichen Verteilmaschine mit zumindest einer vorzugsweise zwei Schleuderscheiben (A), welche vorzugsweise über zwei Wurfschaufeln (B) verfügen, abgeworfen wird, wobei die Verteilmaschine über zumindest einen bewegbaren Sensor und/oder zumindest drei relativ zur Verteilmaschine ortsfeste Sensoren (1-7), vorzugsweise berührungslos arbeitende Sensoren, zur individuellen Detektion des horizontalen Abwurfwinkels des Streugutes für jede Schleuderscheibe (A) verfügt und ein Jobrechner oder Terminal an der Verteilmaschine und/oder einer ihr zugeordneten landwirtschaftlichen Zugmaschine angeordnet ist,
**dadurch gekennzeichnet, dass**
aus den Messdaten des zumindest einen Sensors (1-7), vorzugsweise Radarsensors, in ausreichender Entfernung der Verteilmaschine von vorzugsweise zumindest 1 m eine Entmischung der Streugutkomponenten detektiert und je ein mittlerer Abwurfwinkel (α_{K1}, α_{K1}) für jede Komponente mittels des auf dem Jobrechner oder Terminal installierten Programms berechnet wird.

2. Verfahren nach Anspruch 1, **dadurch gekennzeichnet, dass** neben dem mittleren Abwurfwinkel (α_{K1}, α_{K1}) zusätzlich die mittlere Wurfweite aus zwei Werten der Fluggeschwindigkeit für jede Komponente mittels zumindest eines Sensoren, vorzugsweise Radarsensoren, bestimmt wird, welche die Geschwindigkeit des Streugutes in unterschiedlichen Flugphasen, also unterschiedlichen Abständen von der Verteilmaschine, messen.

3. Verfahren nach Anspruch 1 oder 2, **dadurch gekennzeichnet, dass** der mittlere Auftreffpunkt der Streugutkomponenten auf der landwirtschaftlichen Fläche für zumindest zwei Streugutkomponenten einzeln aus dem Abwurfwinkel (α_{K1}, α_{K1}) und/oder der mittleren Wurfweite berechnet wird.

4. Verfahren nach Anspruch zumindest einem der Ansprüche 1 - 3, **dadurch gekennzeichnet, dass** die verteilte Streugutmenge für jede Streugutkomponente individuell und/oder das Mengenverhältnis und/oder Volumen und/oder Massenverhältnis der verteilten Streugutkomponenten aus den Messsignalen des zumindest einen Sensors bestimmt wird.

5. Verfahren nach zumindest einem der Ansprüche 1 - 4, **dadurch gekennzeichnet, dass** die Einstellparameter der Verteilmaschine derart eingestellt werden, dass mittels eines auf dem Jobrechner und/oder Terminal gespeicherten Programms entsprechend im Jobrechner und/oder Terminal gespeicherter und/oder durch das Bedienpersonal vorgegebener Werte die Entmischung der zumindest zwei Streugutkomponenten justiert wird, vorzugsweise wird ein maximaler Grad der Entmischung angegeben und bei Überschreitung eine Anpassung der Einstellparameter, vorzugsweise Schleuderscheibendrehzahl und/oder Aufgabepunkt des Streugutes auf die Schleuderscheibe (A) vorgenommen.

6. Verfahren nach zumindest einem der Ansprüche 1 - 5, **dadurch gekennzeichnet, dass** der mittlere Abwurfwinkel (α_{K1}, α_{K1}) der Streugutkomponenten an Hand vorgegebener in dem Jobrechner und/oder dem Terminal hinterlegter Parameter, insbesondere des Mischungsverhältnisses der Streugutkomponenten oder anderer Gewichtungsfaktoren, mittels Einstellung von Einstellparametern der Verteilmaschine, wie vorzugsweise Aufgabepunkt des Streugutes auf die Schleuderscheibe (A) und/oder Schleuderscheibendrehzahl durch den Jobrechner und/oder das Terminal automatisch eingestellt wird.

7. Verteilmaschine zur Durchführung eines Verfahrens nach zumindest einem der Ansprüche 1 - 4 mit zumindest einer vorzugsweise zwei Schleuderscheiben (A), welche vorzugsweise über zwei Wurfschaufeln (B) verfügen, wobei die Verteilmaschine über zumindest einen bewegbaren Sensor und/oder zumindest drei relativ zur Verteilmaschine ortsfeste Sensoren (1-7), vorzugsweise berührungslos arbeitende Sensoren, zur individuellen Detektion des horizontalen Abwurfwinkels des Streugutes für jede Schleuderscheibe (A) verfügt und ein Jobrechner oder Terminal an der Verteilmaschine und/oder einer ihr zugeordneten landwirtschaftlichen Zugmaschine angeordnet ist,
**dadurch gekennzeichnet, dass**
aus den Messdaten des zumindest einen Sensors (1-7), vorzugsweise Radarsensors, in ausreichender Entfernung der Verteilmaschine von vorzugsweise zumindest 1 m eine Entmischung der Streugutkomponenten detektiert wird und ein Programm auf dem Jobrechner oder Terminal installiert ist, mittels welchem je ein mittlerer Abwurfwinkel (α_{K1}, α_{K1}) für jede Komponente berechnet wird.

8. Verteilmaschine nach Anspruch 7, **dadurch gekennzeichnet, dass** neben dem mittleren Abwurfwinkel (α_{K1}, α_{K1}) zusätzlich die mittlere Wurfweite aus zwei Werten der Fluggeschwindigkeit für jede Komponente mittels zumindest zweier Sensoren, vorzugsweise Radarsensoren, bestimmt wird, welche die Geschwindigkeit des Streugutes in unterschiedlichen Flugphasen, also unterschiedlichen Abständen von der Verteilmaschine messen.

## Claims

1. Method for determining the distribution of spreading material which has been mixed from at least two components in any desired ratio, preferably less than 9:1, and is ejected by means of an agricultural distribution machine with at least one, preferably two, spreader discs (A) which preferably have two throwing blades (B), wherein the distribution machine has at least one movable sensor and/or at least three sensors (1-7) which are positionally fixed with respect to the distribution machine, preferably sensors which operate in a contactless fashion, for the individual detection of the horizontal ejection angle of the spreading material for each spreader disc (A), and a job computer or terminal is arranged on the distribution machine and/or an agricultural traction machine which is assigned thereto,
**characterized in that**
demixing of spreading material components is detected on the basis of the measurement data of the at least one sensor (1-7), preferably radar sensor, at a sufficient distance from the distribution machine of preferably at least 1 m, and in each case an average ejection angle (α_{K1}, α_{K1}) is calculated for each component by means of the program installed on the job computer or terminal.

2. Method according to Claim 1, **characterized in that**, in addition to the average ejection angle (α_{K1}, α_{K1}), the average throwing distance is additionally determined from two values of the speed of flight for each component by means of at least one sensors, preferably radar sensors which measure the speed of the spreading material in different phases of flight, that is to say different distances from the distribution machine.

3. Method according to Claim 1 or 2, **characterized in that** the average impact point of the spreading material components on the agricultural area is calculated individually for at least two spreading material components from the ejection angle (α_{K1}, α_{K1}) and/or the average throwing distance.

4. Method according to at least one of Claims 1-3, **characterized in that** the distributed spreading material quantity is determined individually for each spreading material component and/or the quantity ratio and/or volume and/or mass ratio of the distributed spreading material components on the basis of the measurement signals of the at least one sensor.

5. Method according to at least one of Claims 1-4, **characterized in that** the setting parameters of the distribution machine are set in such a way that the demixing of the at least two spreading material components is adjusted by means of a program stored on the job computer and/or terminal, in accordance with values which are stored in the job computer and/or terminal and/or which are predefined by the operating personnel, preferably a maximum degree of demixing is specified, and when this is exceeded the setting parameters, preferably the spreader disc rotational speed and/or feed point of the spreading material onto the spreader disc (A) are/is adjusted.

6. Method according to at least one of Claims 1-5, **characterized in that** the average ejection angle (α_{K1}, α_{K1}) of the spreading material components is set automatically on the basis of predefined parameters which are stored in the job computer and/or the terminal, in particular the mixing ratio of the spreading material components or other weighting factors, by setting setting parameters of the distribution machine such as preferably the feed point of the spreading material on to the spreader disc (A) and/or spreader disc rotational speed by the job computer and/or the terminal.

7. Distribution machine for carrying out a method according to at least one of Claims 1-4 having at least one, preferably two, spreader discs (A) which preferably have two throwing blades (B), wherein the distribution machine has at least one movable sensor and/or at least three sensors (1-7) which are positionally fixed with respect to the distribution machine, preferably sensors which operate in a contactless fashion, for the individual detection of the horizontal ejection angle of the spreading material for each spreader disc (A), and a job computer or terminal is arranged on the distribution machine and/or on an agricultural traction machine which is assigned thereto,
**characterized in that**
demixing of spreading material components is detected on the basis of the measurement data of the at least one sensor (1-7), preferably radar sensor, at a sufficient distance from the distribution machine of preferably at least 1 m, and a program is installed on the job computer or terminal, by means of which in each case an average ejection angle (α_{K1}, α_{K1}) is calculated for each component.

8. Distribution machine according to Claim 7, **characterized in that** in addition to the average ejection angle (α_{K1}, α_{K1}) the average throwing distance is additionally determined from two values of the speed of flight for each component by means of at least two sensors, preferably radar sensors, which measure the speed of the spreading material in different phases of flight, that is to say different distances from the distribution machine.

## Revendications

1. Procédé de détermination de la caractéristique d'épandage de matière à épandre, qui a été mélangée à partir d'au moins deux composantes dans un rapport au choix, de préférence inférieur à 9:1, et qui est lancée au moyen d'un épandeur centrifuge agricole comprenant au moins un, de préférence deux disque(s) d'éjection (A) qui disposent de préférence de deux pelles de lancée (B), dans lequel l'épandeur centrifuge dispose d'au moins un capteur mobile et/ou d'au moins trois capteurs fixes (1-7) par rapport à l'épandeur centrifuge, de préférence des capteurs fonctionnant sans contact, pour la détection individuelle de l'angle de lancée horizontal de la matière à épandre pour chaque disque d'éjection (A), et un calculateur de tâches ou terminal est disposé sur l'épandeur centrifuge et/ou une machine de traction agricole qui lui est attribuée,
**caractérisé en ce**
**qu'**à partir des données de mesure de l'au moins un capteur (1-7), de préférence un capteur radar, dans un éloignement suffisant de l'épandeur centrifuge d'au moins 1 m de préférence, une séparation des composantes de la matière à épandre est détectée et un angle de lancée moyen (α_{K1}, α_{K1}) respectif est calculé pour chaque composante au moyen du programme installé sur le calculateur de tâches ou le terminal.

2. Procédé selon la revendication 1, **caractérisé en ce qu'**outre l'angle de lancée moyen (α_{K1}, α_{K1}), la distance de lancer moyenne est déterminée en plus à partir de deux valeurs de la vitesse de vol pour chaque composante au moyen d'au moins un capteur, de préférence des capteurs radar, qui mesurent la vitesse de la matière à épandre dans différentes phases de vol, soit différentes distances à partir de l'épandeur centrifuge.

3. Procédé selon la revendication 1 ou 2, **caractérisé en ce que** le point de rencontre moyen des composantes de matière à épandre sur la surface agricole pour au moins deux composantes de matière à épandre est calculé individuellement à partir de l'angle de lancée (α_{K1}, α_{K1}) et/ou de la distance de lancer moyenne.

4. Procédé selon revendication au moins une des revendications 1 - 3, **caractérisé en ce que** la quantité de matière à épandre épandue pour chaque composante de matière à épandre est déterminée individuellement et/ou le rapport de quantité et/ou le volume et/ou le rapport massique des composantes de matière à épandre épandues est déterminé à partir des signaux de mesure de l'au moins un capteur.

5. Procédé selon au moins une des revendications 1 - 4, **caractérisé en ce que** les paramètres de réglage de l'épandeur centrifuge sont ainsi réglés qu'au moyen d'un programme enregistré sur le calculateur de tâches et/ou le terminal, conformément à des valeurs enregistrées dans le calculateur de tâches et/ou le terminal et/ou prédéfinies par le personnel de service, la séparation des au moins deux composantes de matière à épandre est ajustée, de préférence un degré maximal de séparation est indiqué et en cas de dépassement, une adaptation des paramètres de réglage, de préférence le nombre de tours des disques d'éjection et/ou le point de remise de la matière à épandre, est effectuée sur le disque d'éjection (A).

6. Procédé selon au moins une des revendications 1 - 5, **caractérisé en ce que** l'angle de lancée moyen (α_{K1}, α_{K1}) des composantes de matière à épandre est réglé de façon automatique par le calculateur de tâches et/ou le terminal à l'aide de paramètres consignés prédéfinis dans le calculateur de tâches et/ou le terminal, en particulier du rapport de mélange des composantes de matière à épandre ou d'autres facteurs de pondération, au moyen du réglage de paramètres de réglage de l'épandeur centrifuge, comme de préférence le point de remise de la matière à épandre sur le disque d'éjection (A) et/ou le nombre de tours des disques d'éjection.

7. Épandeur centrifuge pour réaliser un procédé selon au moins l'une des revendications 1 - 4 comprenant au moins un, de préférence deux disques d'éjection (A), lesquels disposent de préférence de deux pelles de lancée (B), dans lequel l'épandeur centrifuge dispose d'au moins un capteur mobile et/ou d'au moins trois capteurs fixes (1-7) par rapport à l'épandeur centrifuge, de préférence des capteurs fonctionnant sans contact, pour la détection individuelle de l'angle de lancée horizontal de la matière à épandre pour chaque disque d'éjection (A), et un calculateur de tâches ou terminal est disposé sur l'épandeur centrifuge et/ou une machine de traction agricole qui lui est attribuée,
**caractérisé en ce**
**qu'**à partir des données de mesure de l'au moins un capteur (1-7), de préférence un capteur radar, dans un éloignement suffisant de l'épandeur centrifuge d'au moins 1 m de préférence, une séparation des composantes de la matière à épandre est détectée et un programme est installé sur le calculateur de tâches ou le terminal au moyen duquel un angle de lancée moyen (α_{K1}, α_{K1}) est calculé pour chaque composante.

8. Épandeur centrifuge selon la revendication 7, **caractérisé en ce qu'**outre l'angle de lancée moyen (α_{K1}, α_{K1}), la distance de lancer moyenne est déterminée en plus à partir de deux valeurs de la vitesse de vol pour chaque composante au moyen d'au moins deux capteurs, de préférence des capteurs radar, qui mesurent la vitesse de la matière à épandre dans différentes phases de vol, soit différentes distances à partir de l'épandeur centrifuge.
